# EUROPEAN PATENT APPLICATION

(11) **EP 4 749 189 A1**
(43) Date of publication of application: **27.05.2026**
(21) Application number: 24845387.0
(22) Date of filing: 09.07.2024
(51) Int. Cl.: F23R 3/28, F02C 7/232, F23R 3/30

(54) **COMBUSTION DEVICE AND GAS TURBINE SYSTEM**

(30) Priority: 21.07.2023 JP 2023119402
(71) Applicant: IHI Corporation, Tokyo 135-8710 (JP)
(72) Inventor: ITO, Shintaro, Tokyo 135-8710 (JP)
(74) Representative: TBK
(86) International application number: PCT/JP2024/024753
(87) International publication number: WO 2025/023006

(57) **Abstract**

A combustion device 10 includes: a liner 13b having an opening 13f at an end and a combustion chamber 13c formed inside the liner 13b; a first ammonia flow passage 24 inserted through the opening 13f of the liner 13b, the first ammonia flow passage 24 communicating with the combustion chamber 13c via an injection valve 14c and supplied with liquid ammonia; a second ammonia flow passage 25 covering an outer periphery of the first ammonia flow passage 24; and an air flow passage 23 covering an outer periphery of the second ammonia flow passage 25.

## Description

### Technical Field

The present disclosure relates to a combustion device and a gas turbine system. The present application claims the benefit of priority based on Japanese Patent Application No. 2023-119402 filed on July 21, 2023, the content of which is incorporated herein.

### Background Art

Gas turbine systems, with which power is obtained by combusting fuel in a combustor, are used. Some of the gas turbine systems use, for example, ammonia as fuel as disclosed in Patent Literature 1. By using ammonia as fuel, carbon dioxide emission is suppressed.

### Citation List

### Patent Literature

Patent Literature 1: JP 2016-191507 A

### Summary

### Technical Problem

Some of the gas turbine systems provide ammonia to a combustion chamber of a combustor after vaporizing ammonia by a vaporizer. Using the vaporizer contributes to an increase in the equipment cost and starting time in the gas turbine system. Therefore, it is conceivable to supply liquid ammonia to the combustion chamber without using the vaporizer. In this case, before the ammonia is injected into the combustion chamber, high-temperature air supplied to the combustion chamber heats the liquid ammonia in a flow passage of a burner, which may cause vaporization of the ammonia in the flow passage of the burner. Such vaporization of ammonia may cause, for example, unstable injection amount of ammonia.

The object of the present disclosure is to provide a combustion device and a gas turbine system capable of suppressing vaporization of liquid ammonia used as fuel.

### Solution to Problem

In order to solve the above problem, a combustion device according to the present disclosure includes: a liner having an opening at an end and a combustion chamber formed inside the liner; a first ammonia flow passage inserted through the opening of the liner, the first ammonia flow passage communicating with the combustion chamber via an injection valve and supplied with liquid ammonia; a second ammonia flow passage covering an outer periphery of the first ammonia flow passage; and an air flow passage covering an outer periphery of the second ammonia flow passage.

A pipe that partitions the first ammonia flow passage and the second ammonia flow passage and at least one through-hole formed on a side surface of the pipe and communicating the first ammonia flow passage and the second ammonia flow passage may also be included.

The through-hole may be formed within a region where the air flow passage is present in the axial direction of the pipe.

At least one through-hole group including a plurality of the through-holes formed at intervals in a circumferential direction of the pipe may also be included.

A plurality of the through-hole groups may be formed at intervals in an axial direction of the pipe.

The positions of the through-holes in the circumferential direction may be different between through-hole groups adjacent to each other.

The through-hole may extend in a direction intersecting with a radial direction of the pipe when viewed in an axial direction of the pipe.

The second ammonia flow passage may be provided with a swirling member that swirls a fluid.

Liquid ammonia may be supplied to the second ammonia flow passage.

In order to solve the above problem, a gas turbine system of the present disclosure includes the combustion device described above.

### Advantageous Effects of Invention

According to the present disclosure, it is possible to suppress vaporization of liquid ammonia used as fuel.

### Brief Description of Drawings

Fig. 1 is a schematic diagram illustrating the structure of a gas turbine system according to an embodiment of the present disclosure.
Fig. 2 is an enlarged view illustrating a burner of a combustion device according to the embodiment of the disclosure.
Fig. 3 is a cross-sectional view of the burner of the combustion device according to the embodiment of the present disclosure as viewed in the axial direction.
Fig. 4 is a cross-sectional view of a burner of a combustion device according to a first modification as viewed in the axial direction.
Fig. 5 is a cross-sectional view of a burner of a combustion device according to a second modification as viewed in the axial direction.
Fig. 6 is an enlarged view illustrating a burner of a combustion device according to a third modification.
Fig. 7 is an enlarged view illustrating a burner of a combustion device according to a fourth modification.

### Description of Embodiments

Embodiments of the present disclosure will be described below by referring to the accompanying drawings. Dimensions, materials, other specific numerical values, and the like illustrated in the embodiments are merely an example for facilitating understanding, and the present disclosure is not limited thereto unless otherwise specified. Note that, in the present specification and the drawings, components having substantially the same function and structure are denoted by the same symbol, and redundant explanations are omitted. Illustration of components not directly related to the present disclosure is omitted.

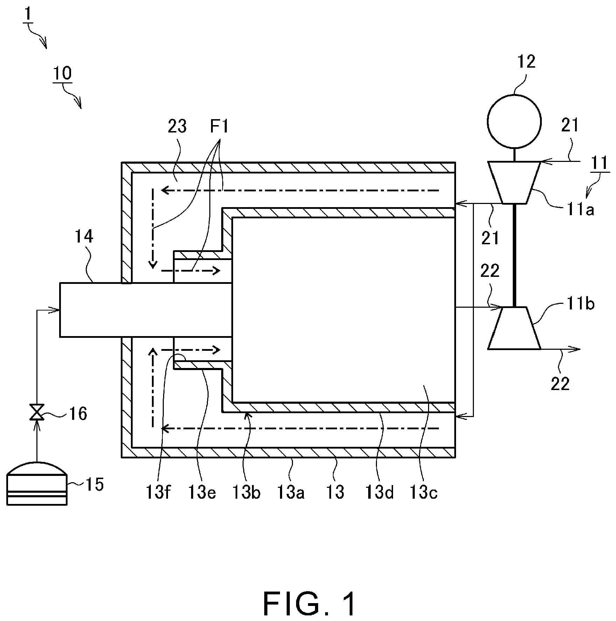

Fig. 1 is a schematic diagram illustrating the structure of a gas turbine system 1 according to the present embodiment. As illustrated in Fig. 1, the gas turbine system 1 includes a turbocharger 11, a generator 12, a combustor 13, a burner 14, an ammonia tank 15, and a flow rate control valve 16.

In the gas turbine system 1, the combustor 13, the burner 14, the ammonia tank 15, and the flow rate control valve 16 are included in a combustion device 10.

The turbocharger 11 includes a compressor 11a and a turbine 11b. A vane wheel of the compressor 11a and a vane wheel of the turbine 11b rotate integrally. The vane wheel of the compressor 11a and the vane wheel of the turbine 11b are connected by a shaft.

The compressor 11a is provided in an intake flow passage 21 connected with the combustor 13. The air supplied to the combustor 13 flows through the intake flow passage 21. An intake port (not illustrated) through which the air is taken in from the outside is provided at an upstream end of the intake flow passage 21. The air taken in from the intake port passes through the compressor 11a and is sent to the combustor 13. The compressor 11a compresses the air and discharges the air to the downstream side.

The turbine 11b is provided in an exhaust flow passage 22 connected with the combustor 13. Exhaust gas discharged from the combustor 13 flows through the exhaust flow passage 22. An exhaust port (not illustrated) through which the exhaust gas is discharged to the outside is provided at a downstream end of the exhaust flow passage 22. The exhaust gas discharged from the combustor 13 passes through the turbine 11b and is sent to the exhaust port. The turbine 11b generates rotational power with the vane wheel of the turbine 11b rotated by the exhaust gas.

The generator 12 is connected with the turbocharger 11. The generator 12 generates electric power using the rotational power generated by the turbocharger 11.

The combustor 13 includes a casing 13a, a liner 13b, and a combustion chamber 13c. The casing 13a has a substantially cylindrical shape. The liner 13b is included inside the casing 13a. The liner 13b has a substantially cylindrical shape. The liner 13b is disposed coaxially with the casing 13a. The combustion chamber 13c is formed inside the liner 13b. That is, the internal space of the liner 13b corresponds to the combustion chamber 13c. The combustion chamber 13c is a substantially cylindrical space. The exhaust flow passage 22 is connected to the combustion chamber 13c.

As will be described later, fuel and air are supplied to the combustion chamber 13c. In the combustion chamber 13c, ammonia is mainly used as fuel to perform combustion. However, other fuels such as natural gas or hydrogen may be used as the fuel supplied to the combustion chamber 13c in addition to ammonia. The exhaust gas generated by the combustion in the combustion chamber 13c is discharged to the exhaust flow passage 22.

The liner 13b has a main body 13d. The main body 13d has a substantially cylindrical shape. The combustion chamber 13c is formed inside the main body 13d. A communication portion 13e is provided at an end of the main body 13d. The communication portion 13e communicates the outside of the liner 13b with the combustion chamber 13c. The communication portion 13e has a cylindrical shape and is disposed coaxially with the main body 13d. The outer diameter of the communication portion 13e is smaller than the outer diameter of the main body 13d. The inner diameter of the communication portion 13e is smaller than the inner diameter of the main body 13d. Note that the inner diameter of the communication portion 13e may decrease or increase as it approaches the main body 13d. Various members such as swirl vanes for forming a swirl flow of air may be provided in the communication portion 13e. An opening 13f is formed at an end of the communication portion 13e on the side opposite to the main body 13d. In this manner, the opening 13f is formed at the end of the liner 13b. Note that the liner 13b illustrated in Fig. 1 may be divided into a plurality of members. In this case, different members among the plurality of members constituting the liner 13b illustrated in Fig. 1 may be referred to by different names. For example, the communication portion 13e may be formed of a member different from the other portion of the liner 13b and may be referred to by a name different from a name indicating the other portion.

An air flow passage 23 is formed between the inner surface of the casing 13a and the outer surface of the liner 13b. The intake flow passage 21 is connected to the air flow passage 23. Air is sent from the compressor 11a to the air flow passage 23 via the intake flow passage 21. The air flow passage 23 communicates with the opening 13f of the liner 13b. The burner 14 is inserted through the opening 13f of the liner 13b. As indicated by arrows F1, the air sent to the air flow passage 23 passes through the air flow passage 23 and then is injected into the combustion chamber 13c through the opening 13f of the liner 13b. Specifically, the air sent to the air flow passage 23 passes between the inner peripheral surface of the communication portion 13e and the outer peripheral surface of the burner 14 and is injected into the combustion chamber 13c.

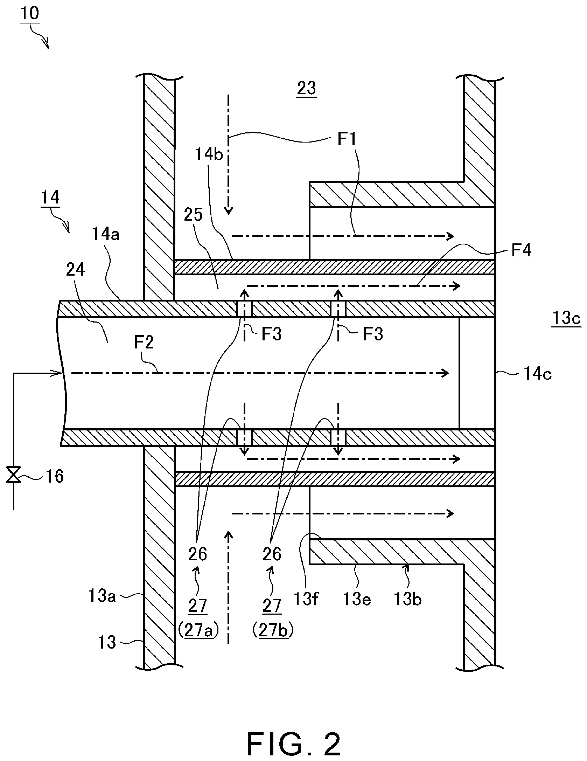

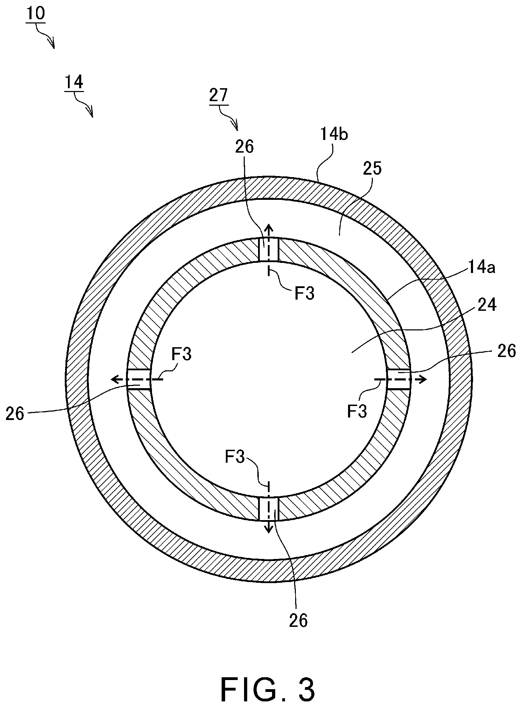

The burner 14 injects ammonia as fuel into the combustion chamber 13c of the combustor 13. The burner 14 has a substantially cylindrical shape. Hereinafter, the combustion chamber 13c side (right side in Fig. 1) of the burner 14 is referred to as a front end side, and the opposite side (left side in Fig. 1) of the burner 14 to the combustion chamber 13c side is referred to as a rear end side. The front end side of the burner 14 is inserted through the opening 13f of the liner 13b. The burner 14 penetrates the casing 13a and extends to the outside of the casing 13a. The rear end of the burner 14 is located outside the casing 13a. Details of the burner 14 will be described later with reference to Figs. 2 and 3.

The ammonia tank 15 is connected to the rear end of the burner 14. Liquid ammonia is stored in the ammonia tank 15. The flow rate control valve 16 is provided in a flow passage connecting the ammonia tank 15 and the burner 14. The ammonia stored in the ammonia tank 15 is supplied to the burner 14. The flow rate control valve 16 controls the flow rate of ammonia supplied from the ammonia tank 15 to the burner 14. Note that various devices (such as a shut-off valve, a check valve, or various sensors) not illustrated in Fig. 1 may be provided in the flow passage connecting the ammonia tank 15 and the burner 14.

Fig. 2 is an enlarged view illustrating the burner 14 of the combustion device 10 according to the present embodiment. As illustrated in Fig. 2, the burner 14 includes a first pipe 14a, a second pipe 14b, and an injection valve 14c. As described later, the example of Fig. 2 is merely an example, and various modifications may be made to the example of Fig. 2.

In the example of Fig. 2, the first pipe 14a and the second pipe 14b have a cylindrical shape. The second pipe 14b is disposed coaxially with the first pipe 14a and on a radially outer side with respect to the first pipe 14a. The second pipe 14b is separated from the first pipe 14a in the radial direction. The inner diameter of the second pipe 14b is larger than the outer diameter of the first pipe 14a. The second pipe 14b covers the outer peripheral surface of the first pipe 14a. That is, the inner peripheral surface of the second pipe 14b faces the outer peripheral surface of the first pipe 14a.

In the example of Fig. 2, the axial direction of the first pipe 14a and the second pipe 14b corresponds to the axial direction of the burner 14. Hereinafter, the radial direction of the burner 14, the axial direction of the burner 14, and the circumferential direction of the burner 14 are also simply referred to as the radial direction, the axial direction, and the circumferential direction, respectively.

The first pipe 14a and the second pipe 14b are inserted through the opening 13f of the liner 13b. The axial positions of the front ends of the first pipe 14a and the second pipe 14b coincide with, for example, the axial position of an end of the communication portion 13e of the liner 13b on the combustion chamber 13c side. The first pipe 14a penetrates the casing 13a and extends to the outside of the casing 13a. Therefore, the rear end of the first pipe 14a is located outside the casing 13a. Meanwhile, the rear end of the second pipe 14b is in contact with the inner surface of the casing 13a. For example, the rear end of the second pipe 14b is fixed to the inner surface of the casing 13a.

The internal space of the first pipe 14a corresponds to the first ammonia flow passage 24. The first ammonia flow passage 24 is defined by the inner peripheral surface of the first pipe 14a. The first ammonia flow passage 24 is a flow passage through which ammonia flows. In particular, the first ammonia flow passage 24 is a flow passage through which ammonia injected into the combustion chamber 13c via the injection valve 14c flows.

The first ammonia flow passage 24 has a cylindrical shape. The first ammonia flow passage 24 extends in the axial direction of the burner 14. The area of the cross section orthogonal to the axial direction of the first ammonia flow passage 24 is constant regardless of the axial position. The first ammonia flow passage 24 is inserted through the opening 13f of the liner 13b.

The ammonia tank 15 is connected to the rear end of the first ammonia flow passage 24 via the flow rate control valve 16. Therefore, ammonia is supplied from the ammonia tank 15 to the first ammonia flow passage 24. Specifically, liquid ammonia is supplied to the first ammonia flow passage 24.

The injection valve 14c is provided at the front end of the first pipe 14a. The injection valve 14c has a substantially cylindrical shape. The injection valve 14c is fitted to the front end side of the inner peripheral surface of the first pipe 14a. The front end of the first ammonia flow passage 24 is defined by the injection valve 14c. The first ammonia flow passage 24 communicates with the combustion chamber 13c via the injection valve 14c. The injection valve 14c is, for example, a pressure injection valve or an air flow injection valve. A pressure injection valve is a type of valve that atomizes liquid using a pressure difference between the inside and the outside of the pressure injection valve. The air flow injection valve is a type of valve that generates a film of liquid to be injected and atomizes the liquid using a shearing force between the film and air.

As indicated by an arrow F2, liquid ammonia supplied to the first ammonia flow passage 24 flows in the axial direction through the first ammonia flow passage 24. The liquid ammonia that has passed through the first ammonia flow passage 24 is injected from the injection valve 14c into the combustion chamber 13c. The injection direction of ammonia from the injection valve 14c substantially coincides with the axial direction of the burner 14. For example, in a case where ammonia is injected from the injection valve 14c in a conical shape while expanding in the radial direction, the extending direction of the central axis of the cone corresponding to the main injection direction substantially coincides with the axial direction of the burner 14.

The space between the first pipe 14a and the second pipe 14b corresponds to the second ammonia flow passage 25. The second ammonia flow passage 25 is defined by the outer peripheral surface of the first pipe 14a and the inner peripheral surface of the second pipe 14b. The second ammonia flow passage 25 is a flow passage through which ammonia flows.

The second ammonia flow passage 25 has a cylindrical shape. The second ammonia flow passage 25 extends in the axial direction of the burner 14. The area of the cross section of the second ammonia flow passage 25 orthogonal to the axial direction is constant regardless of the axial position. The second ammonia flow passage 25 is inserted through the opening 13f of the liner 13b.

The second ammonia flow passage 25 covers the outer periphery of the first ammonia flow passage 24. Note that the axial range of the outer periphery of the first ammonia flow passage 24 covered by the second ammonia flow passage 25 is not particularly limited. It suffices that the second ammonia flow passage 25 cover at least a part of the outer periphery of the first ammonia flow passage 24. The outer periphery of the second ammonia flow passage 25 is covered with the air flow passage 23. Note that the axial range of the outer periphery of the second ammonia flow passage 25 covered by the air flow passage 23 is not particularly limited. It suffices that the air flow passage 23 cover at least a part of the outer periphery of the second ammonia flow passage 25. The rear end of the second ammonia flow passage 25 is closed by the casing 13a. However, the rear end of the second pipe 14b may be located outside the casing 13a. In this case, the rear end of the second ammonia flow passage 25 is closed by a member different from the casing 13a. The front end of the second ammonia flow passage 25 is open and communicates with the combustion chamber 13c.

A plurality of through-holes 26 are formed on a side surface of the first pipe 14a that partitions the first ammonia flow passage 24 and second ammonia flow passage 25. Note that the number of through-holes 26 may be one. Details of the arrangement of the through-holes 26 and the like will be described later with reference to Fig. 3. A through-hole 26 communicates the inside and the outside of the first pipe 14a. The through-holes 26 are formed on the combustion chamber 13c side with respect to the casing 13a. Accordingly, the through-holes 26 communicate the first ammonia flow passage 24 and the second ammonia flow passage 25.

As indicated by an arrow F3, a part of the liquid ammonia flowing through the first ammonia flow passage 24 leaks out to the second ammonia flow passage 25 through the through-holes 26. As indicated by an arrow F4, the liquid ammonia leaking into the second ammonia flow passage 25 flows in the axial direction through the second ammonia flow passage 25. At this point, the liquid ammonia flowing through the second ammonia flow passage 25 is heated by high-temperature air flowing through the air flow passage 23. As a result, a part or all of the liquid ammonia flowing through the second ammonia flow passage 25 is vaporized. The ammonia that has passed through the second ammonia flow passage 25 is injected into the combustion chamber 13c from the front end of the second ammonia flow passage 25. The injection direction of ammonia from the second ammonia flow passage 25 substantially coincides with the axial direction of the burner 14.

As described above, the combustion device 10 includes: the liner 13b having the opening 13f at an end and the combustion chamber 13c formed inside the liner 13b; the first ammonia flow passage 24 inserted through the opening 13f of the liner 13b, the first ammonia flow passage 24 communicating with the combustion chamber 13c via the injection valve 14c and supplied with liquid ammonia; the second ammonia flow passage 25 covering the outer periphery of the first ammonia flow passage 24; and the air flow passage 23 covering the outer periphery of the second ammonia flow passage 25.

Unlike the present embodiment, in a case where the second ammonia flow passage 25 is not disposed between the first ammonia flow passage 24 and the air flow passage 23, liquid ammonia flowing through the first ammonia flow passage 24 is heated by high-temperature air flowing through the air flow passage 23. Therefore, ammonia may be vaporized in the first ammonia flow passage 24. When ammonia is vaporized in the first ammonia flow passage 24, an injection amount of ammonia to the combustion chamber 13c becomes unstable.

Meanwhile, in the combustion device 10, the second ammonia flow passage 25 is interposed between the first ammonia flow passage 24 and the air flow passage 23. This makes it possible to prevent liquid ammonia flowing through the first ammonia flow passage 24 from being heated by air flowing through the air flow passage 23. Therefore, vaporization of ammonia in the first ammonia flow passage 24 can be suppressed. As described above, according to the combustion device 10, it is possible to suppress vaporization of liquid ammonia used as fuel.

In particular, in the combustion device 10, liquid ammonia is supplied to the second ammonia flow passage 25. As a result, a part or all of the liquid ammonia flowing through the second ammonia flow passage 25 is vaporized by being heated by high-temperature air flowing through the air flow passage 23. Therefore, the liquid ammonia flowing through the first ammonia flow passage 24 can be cooled by heat of vaporization of ammonia in the second ammonia flow passage 25. In addition, a part of the heat given from the air flowing through the air flow passage 23 to the liquid ammonia flowing through the second ammonia flow passage 25 is consumed as latent heat for vaporizing the ammonia and is not transmitted to the ammonia flowing through the first ammonia flow passage 24. In addition, since gaseous ammonia flowing through the second ammonia flow passage 25 is heated by the air flowing through the air flow passage 23 only for a short time until the ammonia is injected into the combustion chamber 13c from the front end of the second ammonia flow passage 25, the temperature rise of the ammonia can be kept low. Therefore, vaporization of ammonia in the first ammonia flow passage 24 can be more effectively suppressed.

Furthermore, gaseous ammonia vaporized in the second ammonia flow passage 25 is injected into the combustion chamber 13c from the front end of the second ammonia flow passage 25. Gaseous ammonia is more likely to burn than liquid ammonia is. Therefore, the combustibility in the combustion chamber 13c can be improved.

In particular, the combustion device 10 includes the first pipe 14a that is a pipe partitioning the first ammonia flow passage 24 and the second ammonia flow passage 25 and at least one through-hole 26 formed on the side surface of the first pipe 14a and communicating the first ammonia flow passage 24 and the second ammonia flow passage 25. As a result, a part of the liquid ammonia flowing through the first ammonia flow passage 24 leaks out to the second ammonia flow passage 25 through the through-holes 26. Therefore, supply of liquid ammonia to the second ammonia flow passage 25 is properly implemented.

In particular, in the combustion device 10, the through-holes 26 are formed within a region where the air flow passage 23 is present in the axial direction of the first pipe 14a. As a result, the liquid ammonia sent from the through-holes 26 to the second ammonia flow passage 25 collides with the inner peripheral surface of the second pipe 14b that is directly heated by the air flowing through the air flow passage 23. Therefore, the second pipe 14b can be cooled more effectively. As a result, the temperature of the second pipe 14b decreases, whereby it is made possible to prevent the first pipe 14a from being heated by radiant heat from the second pipe 14b Therefore, heating of ammonia in the first ammonia flow passage 24 can be more effectively suppressed, and vaporization of ammonia in the first ammonia flow passage 24 can be more effectively suppressed.

Fig. 3 is a cross-sectional view of the burner 14 of the combustion device 10 according to the embodiment as viewed in the axial direction. As illustrated in Fig. 3, a plurality of through-holes 26 are formed on the side surface of the first pipe 14a at intervals in the circumferential direction. Hereinafter, the plurality of through-holes 26 provided at intervals in the circumferential direction are referred to as a through-hole group 27. In one through-hole group 27, the positions of the through-holes 26 in the axial direction of the first pipe 14a coincide with each other. In the example of Fig. 2, two through-hole groups 27 of a through-hole group 27a and a through-hole group 27b are formed at intervals in the axial direction of the first pipe 14a. The through-hole group 27b is located on the combustion chamber 13c side with respect to the through-hole group 27a. Note that the number of through-hole groups 27 may be one or three or more.

In the combustion device 10, the number of through-holes 26 and the positions of the through-holes 26 in the circumferential direction coincide between the through-hole group 27a and the through-hole group 27b. In the example of Fig. 3, in each of the through-hole groups 27, four through-holes 26 are formed at equal intervals in the circumferential direction. However, in each of the through-hole groups 27, the number of through-holes 26 may be other than 4. In each of the through-hole groups 27, a plurality of through-holes 26 may be formed at unequal intervals in the circumferential direction.

A through-hole 26 extends in the radial direction of the first pipe 14a. Therefore, as indicated by an arrow F3, liquid ammonia sent from the first ammonia flow passage 24 to a through-hole 26 flows from the through-hole 26 to the second ammonia flow passage 25 in the radial direction of the first pipe 14a.

As described above, the combustion device 10 includes at least one through-hole group 27 including the plurality of through-holes 26 provided at intervals in the circumferential direction of the first pipe 14a. As a result, as compared with a case where the number of through-holes 26 at the same axial position is one, the amount of liquid ammonia supplied to the second ammonia flow passage 25 is increased, whereby the ability to cool the liquid ammonia flowing through the first ammonia flow passage 24 is improved. Furthermore, in the second ammonia flow passage 25, the supply amount of ammonia is suppressed from being biased in the circumferential direction.

In particular, in the combustion device 10, the plurality of through-hole groups 27 are formed at intervals in the axial direction of the first pipe 14a. As a result, as compared with a case where the number of through-hole groups 27 is one, the amount of liquid ammonia supplied to the second ammonia flow passage 25 is further increased, whereby the ability to cool the liquid ammonia flowing through the first ammonia flow passage 24 is further improved.

The combustion device 10 has been described above with reference to Figs. 1 to 3. However, various modifications may be made to the example described above.

For example, the example in which the first pipe 14a and the second pipe 14b have a cylindrical shape has been described above. However, the shape of the cross section orthogonal to the axial direction of the first pipe 14a and the second pipe 14b may be other than a circle and may be, for example, a polygon.

For example, the example in which the central axis of the second pipe 14b and the central axis of the first pipe 14a coincide with each other has been described above. However, the central axis of the second pipe 14b and the central axis of the first pipe 14a may not coincide with each other.

For example, in the above description, an example has been described in which the areas of the cross sections of the first ammonia flow passage 24 and the second ammonia flow passage 25 orthogonal to the axial direction are constant regardless of the axial position. However, the area of the cross section orthogonal to the axial direction of at least one of the first ammonia flow passage 24 or the second ammonia flow passage 25 may vary depending on the axial position. For example, the area of the cross section orthogonal to the axial direction of the second ammonia flow passage 25 may decrease as it approaches the combustion chamber 13c. In this case, the flow rate of ammonia can be increased on the front end side of the second ammonia flow passage 25. Therefore, the ability to cool the liquid ammonia flowing through the first ammonia flow passage 24 is improved on the front end side of the burner 14 that is close to the combustion chamber 13c and where heating by the flame in the combustion chamber 13c is easily performed. For example, the area of the cross section orthogonal to the axial direction of the second ammonia flow passage 25 may increase as it approaches the combustion chamber 13c. In this case, a pressure loss caused by an increase in the volume of ammonia associated with vaporization can be reduced on the front end side of the second ammonia flow passage 25.

For example, the example in which the axial positions of the front ends of the first pipe 14a and the second pipe 14b coincide with each other has been described above. However, the axial positions of the front ends of the first pipe 14a and the second pipe 14b may not coincide with each other. For example, the axial position of the front end of the second pipe 14b may be farther from the combustion chamber 13c than the axial position of the front end of the first pipe 14a is. In this case, ammonia injected from the front end of the second pipe 14b is mixed with air flowing through the air flow passage 23, whereby the combustibility of ammonia is improved. For example, the axial position of the front end of the first pipe 14a may be farther from the combustion chamber 13c than the axial position of the front end of the second pipe 14b is. In this case, on the front end side of the burner 14, the ratio of the volume of the second ammonia flow passage 25 to the volume of the first ammonia flow passage 24 increases, whereby the ability to cool the liquid ammonia flowing through the first ammonia flow passage 24 is improved.

For example, the example in which the injection direction of ammonia from the injection valve 14c and the injection direction of ammonia from the second ammonia flow passage 25 coincide with each other has been described above. However, the injection direction of ammonia from the injection valve 14c and the injection direction of ammonia from the second ammonia flow passage 25 may not coincide with each other. For example, the injection direction of ammonia from the second ammonia flow passage 25 may be inclined inward in the radial direction of the burner 14 as it advances into the combustion chamber 13c.

For example, in the above description, the example in which liquid ammonia is supplied from the first ammonia flow passage 24 to the second ammonia flow passage 25 via the through-holes 26 has been described. However, ammonia may be supplied to the second ammonia flow passage 25 from a flow passage other than the first ammonia flow passage 24. For example, the through-holes 26 may be omitted from the burner 14. In this case, a flow passage different from the flow passage connected with the first ammonia flow passage 24 is connected to the second ammonia flow passage 25, and ammonia is supplied through this flow passage. In this case, ammonia may be supplied from the ammonia tank 15 to the second ammonia flow passage 25, or ammonia may be supplied from a supply source different from the ammonia tank 15. In this case, liquid ammonia may be supplied to the second ammonia flow passage 25, or gaseous ammonia may be supplied thereto.

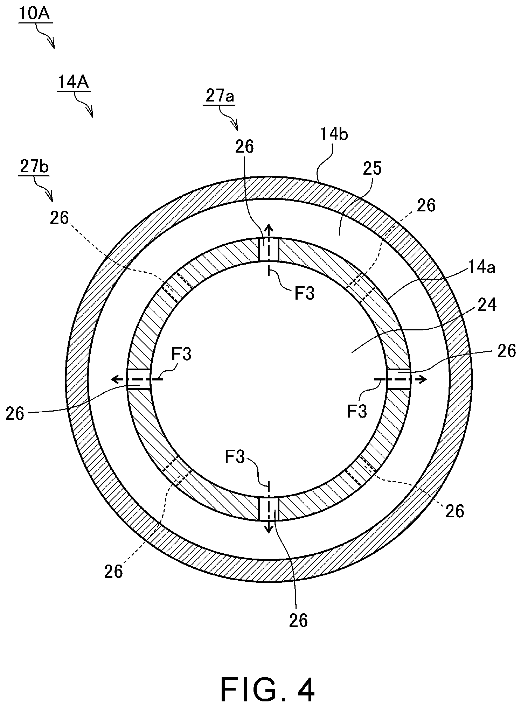

Combustion devices 10A, 10B, 10C, and 10D according to respective modifications will be described below with reference to Figs. 4 to 7. The combustion devices 10A, 10B, 10C, and 10D according to the respective modifications described below are provided, for example, in the gas turbine system 1 similarly to the combustion device 10 described above.

Fig. 4 is a cross-sectional view of a burner 14A of a combustion device 10A according to a first modification as viewed in the axial direction. The combustion device 10A is different from the combustion device 10 described above in the arrangement of the through-holes 26.

In Fig. 4, through-holes 26 of a through-hole group 27a are indicated by solid lines, and through-holes 26 of a through-hole group 27b are indicated by broken lines. As illustrated in Fig. 4, in the combustion device 10A, the number of through-holes 26 coincides between the through-hole group 27a and the through-hole group 27b. Specifically, in the example of Fig. 4, in each of the through-hole groups 27, four through-holes 26 are provided at equal intervals in the circumferential direction. Meanwhile, in the combustion device 10A, the positions of the through-holes 26 in the circumferential direction are different between the through-hole group 27a and the through-hole group 27b. Specifically, in the example of Fig. 4, the circumferential position of each of the through-holes 26 of the through-hole group 27b is shifted by 45° with respect to the circumferential position of a corresponding through-hole 26 of the through-hole group 27a. Therefore, there is no pair of through-holes 26 whose positions in the circumferential direction coincide between the through-hole group 27a and the through-hole group 27b. Note that the angle corresponding to the shift amount of the circumferential position between each of the through-holes 26 of the through-hole group 27b and a corresponding through-hole 26 of the through-hole group 27a may be other than 45°.

In the combustion device 10 described above, the positions of the through-holes 26 in the circumferential direction coincide between the adjacent through-hole groups 27. Specifically, the positions of the through-holes 26 in the circumferential direction coincide between the through-hole group 27a and the through-hole group 27b. Therefore, the flow of ammonia sent from the through-holes 26 of the through-hole group 27b to the second ammonia flow passage 25 is inhibited by ammonia sent from the through-holes 26 of the through-hole group 27a to the second ammonia flow passage 25 and flowing in the second ammonia flow passage 25 in the axial direction. Therefore, the ability to cool the second pipe 14b by ammonia sent from the through-holes 26 of the through-hole group 27b to the second ammonia flow passage 25 decreases.

On the other hand, in the combustion device 10A, the positions of the through-holes 26 in the circumferential direction are different between the adjacent through-hole groups 27. Specifically, the positions of the through-holes 26 in the circumferential direction are different between the through-hole group 27a and the through-hole group 27b. Accordingly, ammonia sent from the through-holes 26 of the through-hole group 27a to the second ammonia flow passage 25 and flowing in the second ammonia flow passage 25 in the axial direction is suppressed from inhibiting the flow of ammonia sent from the through-holes 26 of the through-hole group 27b to the second ammonia flow passage 25. Therefore, a decrease in the ability to cool the second pipe 14b by ammonia sent from the through-holes 26 of the through-hole group 27b to the second ammonia flow passage 25 is suppressed.

The combustion device 10A has been described above with reference to Fig. 4. However, modifications similar to the various modifications described above that can be made to the combustion device 10 described above may be made to the combustion device 10A.

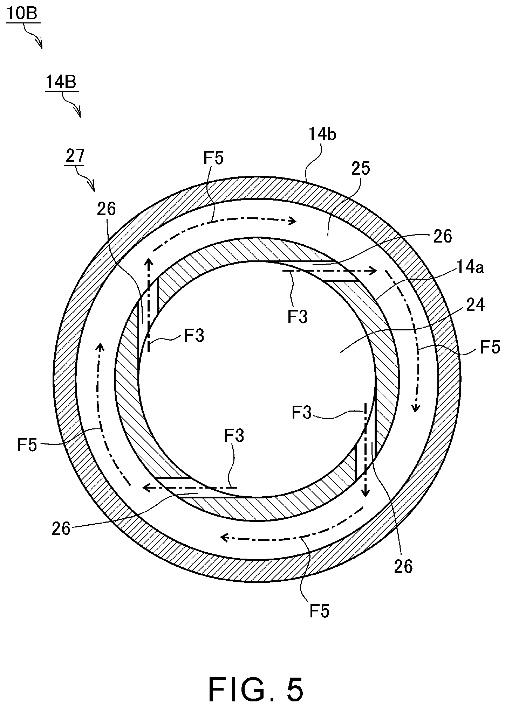

Fig. 5 is a cross-sectional view of a burner 14B of a combustion device 10B according to a second modification as viewed in the axial direction. In the combustion device 10B, the extending directions of the through-holes 26 are different from those of the combustion device 10 described above.

In the combustion device 10B, for example, the number of through-holes 26 and the positions of the through-holes 26 in the circumferential direction coincide between a through-hole group 27a and a through-hole group 27b. Specifically, in the example of Fig. 5, in each of the through-hole groups 27, four through-holes 26 are provided at equal intervals in the circumferential direction. However, in the combustion device 10B, similarly to the combustion device 10A described above, the positions of the through-holes 26 in the circumferential direction may be different between the adjacent through-hole groups 27.

As illustrated in Fig. 5, in the combustion device 10B, a through-hole 26 extends in a direction intersecting the radial direction of the first pipe 14a when viewed in the axial direction of the first pipe 14a. The radial direction of the first pipe 14a is an extending direction of a line segment connecting the through-hole 26 and the central axis of the first pipe 14a. That is, the through-hole 26 extends in a direction intersecting with the direction from the through-hole 26 toward the central axis of the first pipe 14a when viewed in the axial direction of the first pipe 14a. In other words, the central axis of the through-hole 26 does not pass through the central axis of the first pipe 14a and is eccentric with respect to the central axis of the first pipe 14a. Specifically, in the example of Fig. 5, the through-hole 26 extends in the tangential direction of the first pipe 14a. However, the extending direction of the through-hole 26 may be inclined with respect to the tangential direction of the first pipe 14a.

As described above, in the combustion device 10B, a through-hole 26 extends in a direction intersecting the radial direction of the first pipe 14a when viewed in the axial direction of the first pipe 14a. Therefore, as indicated by an arrow F3, liquid ammonia sent from the first ammonia flow passage 24 to a through-hole 26 flows from the through-hole 26 to the second ammonia flow passage 25 in a direction intersecting the radial direction of the first pipe 14a. As a result, as indicated by an arrow F5, ammonia swirls in the circumferential direction in the second ammonia flow passage 25. Therefore, in the second ammonia flow passage 25, the supply amount of ammonia is more effectively suppressed from being biased in the circumferential direction.

Furthermore, in the second ammonia flow passage 25, centrifugal force associated with swirling acts on ammonia. Therefore, ammonia injected from the front end of the second ammonia flow passage 25 advances into the combustion chamber 13c while spreading radially outward. Therefore, the flame region formed inside the combustion chamber 13c can be enlarged in the radial direction. In addition, the flow of ammonia injected from the injection valve 14c is prevented from being inhibited by ammonia injected from the front end of the second ammonia flow passage 25.

The combustion device 10B has been described above with reference to Fig. 5. However, modifications similar to the various modifications described above that can be made to the combustion device 10 described above may be made to the combustion device 10B.

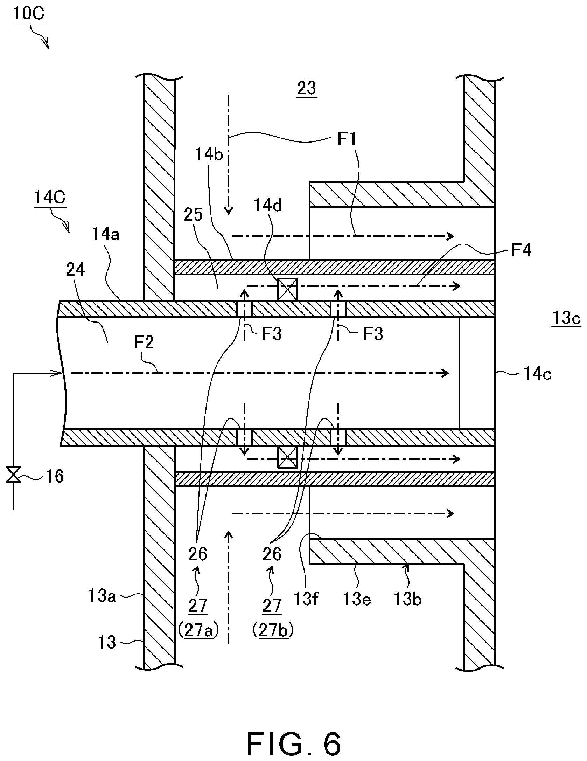

Fig. 6 is an enlarged view illustrating a burner 14C of a combustion device 10C according to a third modification. The combustion device 10C corresponds to an example in which a swirling member 14d is added to the combustion device 10 described above.

The swirling member 14d is a member that swirls a fluid. The swirling member 14d is provided in a second ammonia flow passage 25. Therefore, the swirling member 14d applies a swirling force in the circumferential direction of the burner 14C to ammonia flowing through the second ammonia flow passage 25. The swirling member 14d is, for example, a plurality of swirl vanes called swirlers. For example, in the second ammonia flow passage 25, a plurality of swirl vanes are provided at intervals in the circumferential direction. Accordingly, a swirling force is applied to ammonia flowing through the second ammonia flow passage 25 indicated by an arrow F4.

As described above, in the combustion device 10C, the second ammonia flow passage 25 is provided with the swirling member 14d that swirls the fluid. As a result, ammonia swirls in the circumferential direction in the second ammonia flow passage 25. Therefore, in the second ammonia flow passage 25, the supply amount of ammonia is more effectively suppressed from being biased in the circumferential direction.

Furthermore, in the second ammonia flow passage 25, centrifugal force associated with swirling acts on ammonia. Therefore, ammonia injected from the front end of the second ammonia flow passage 25 advances into the combustion chamber 13c while spreading radially outward. Therefore, the flame region formed inside the combustion chamber 13c can be enlarged in the radial direction. In addition, the flow of ammonia injected from the injection valve 14c is prevented from being inhibited by ammonia injected from the front end of the second ammonia flow passage 25.

The combustion device 10C has been described above with reference to Fig. 6. However, modifications similar to the various modifications described above that can be made to the combustion device 10 described above may be made to the combustion device 10C. In the combustion device 10C, similarly to the combustion device 10A described above, the positions of through-holes 26 in the circumferential direction may be different between adjacent through-hole groups 27. In the combustion device 10C, similarly to the combustion device 10B described above, the through-holes 26 may extend in a direction intersecting the radial direction of the first pipe 14a when viewed in the axial direction of the first pipe 14a.

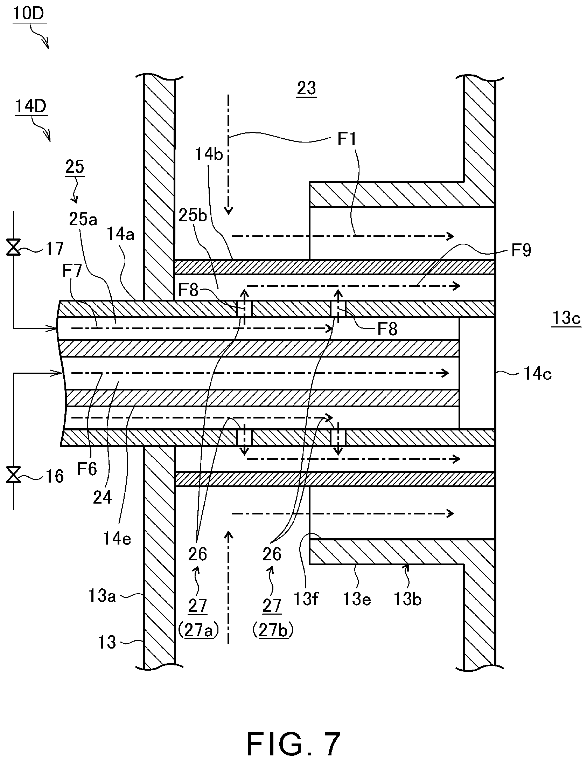

Fig. 7 is an enlarged view illustrating a burner 14D of a combustion device 10D according to a fourth modification. As described above, ammonia may be supplied to the second ammonia flow passage 25 from a flow passage other than the first ammonia flow passage 24. The combustion device 10D corresponds to such an example.

As illustrated in Fig. 7, in a burner 14D, a third pipe 14e is added to the burner 14 described above. The third pipe 14e is disposed on a radially inner side with respect to the first pipe 14a and coaxially with the first pipe 14a. The third pipe 14e is separated from the first pipe 14a in the radial direction. The outer diameter of the third pipe 14e is smaller than the inner diameter of the first pipe 14a. The first pipe 14a covers the outer peripheral surface of the third pipe 14e. That is, the inner peripheral surface of the first pipe 14a faces the outer peripheral surface of the third pipe 14e.

An opening at the front end of the third pipe 14e is closed by the injection valve 14c. The internal space of the third pipe 14e communicates with the combustion chamber 13c via the injection valve 14c. Meanwhile, the space between the first pipe 14a and the third pipe 14e is closed by the injection valve 14c and does not communicate with the combustion chamber 13c. The third pipe 14e penetrates the casing 13a and extends to the outside of the casing 13a. Therefore, the rear end of the third pipe 14e is located outside the casing 13a.

In the combustion device 10D, the internal space of the third pipe 14e corresponds to the first ammonia flow passage 24. The first ammonia flow passage 24 is defined by the inner peripheral surface of the third pipe 14e. The ammonia tank 15 is connected to the rear end of the first ammonia flow passage 24 via the flow rate control valve 16. Therefore, liquid ammonia is supplied from the ammonia tank 15 to the first ammonia flow passage 24. As indicated by an arrow F6, the liquid ammonia supplied to the first ammonia flow passage 24 flows in the axial direction through the first ammonia flow passage 24. The liquid ammonia that has passed through the first ammonia flow passage 24 is injected from the injection valve 14c into the combustion chamber 13c.

In the combustion device 10D, the second ammonia flow passage 25 includes an upstream flow passage 25a, which is the space between the third pipe 14e and the first pipe 14a, and a downstream flow passage 25b, which is a space between the first pipe 14a and the second pipe 14b. The upstream flow passage 25a is defined by the outer peripheral surface of the third pipe 14e and the inner peripheral surface of the first pipe 14a. The downstream flow passage 25b is defined by the outer peripheral surface of the first pipe 14a and the inner peripheral surface of the second pipe 14b. Each of the upstream flow passage 25a and the downstream flow passage 25b has a cylindrical shape. The second ammonia flow passage 25 covers the outer periphery of the first ammonia flow passage 24. The outer periphery of the second ammonia flow passage 25 is covered with the air flow passage 23.

The rear end of the downstream flow passage 25b is closed by the casing 13a. The front end of the downstream flow passage 25b is open and communicates with the combustion chamber 13c. The front end of the upstream flow passage 25a is closed by the injection valve 14c. An ammonia tank 15 is connected to the rear end of the upstream flow passage 25a via a flow rate control valve 17. Therefore, liquid ammonia is supplied from the ammonia tank 15 to the upstream flow passage 25a. Then, as indicated by an arrow F7, the liquid ammonia supplied to the upstream flow passage 25a flows in the axial direction through the upstream flow passage 25a.

As indicated by an arrow F8, the liquid ammonia flowing through the upstream flow passage 25a leaks out to the downstream flow passage 25b through the through-holes 26. Then, as indicated by an arrow F9, the liquid ammonia leaked into the downstream flow passage 25b flows in the axial direction through the downstream flow passage 25b. At this point, the liquid ammonia flowing through the downstream flow passage 25b is heated by high-temperature air flowing through the air flow passage 23. As a result, a part or all of the liquid ammonia flowing through the downstream flow passage 25b is vaporized. The ammonia that has passed through the downstream flow passage 25b is injected into the combustion chamber 13c from the front end of the downstream flow passage 25b.

As described above, similarly to the combustion device 10 described above, the combustion device 10D includes: the liner 13b having the opening 13f at an end and the combustion chamber 13c formed inside the liner 13b; the first ammonia flow passage 24 inserted through the opening 13f of the liner 13b, the first ammonia flow passage 24 communicating with the combustion chamber 13c via the injection valve 14c and supplied with liquid ammonia; the second ammonia flow passage 25 covering the outer periphery of the first ammonia flow passage 24; and the air flow passage 23 covering the outer periphery of the second ammonia flow passage 25. Therefore, similar effects to those of the combustion device 10 described above are obtained.

In particular, in the combustion device 10D, a flow passage different from the flow passage connected with the first ammonia flow passage 24 is connected to the second ammonia flow passage 25, and ammonia is supplied through this flow passage. This makes it possible to separately adjust the supply amount of ammonia to the first ammonia flow passage 24 and the supply amount of ammonia to the second ammonia flow passage 25. Therefore, the ability to cool liquid ammonia flowing through the first ammonia flow passage 24 can be easily adjusted, and thus vaporization of ammonia in the first ammonia flow passage 24 can be more effectively suppressed.

The combustion device 10D has been described above with reference to Fig. 7. However, modifications similar to the various modifications described above that can be made to the combustion device 10 described above may be made to the combustion device 10D.

Although the embodiments of the present disclosure have been described with reference to the accompanying drawings, it is naturally understood that the present disclosure is not limited to the above embodiments. It is clear that those skilled in the art can conceive various modifications or variations within the scope described in the claims, and it is understood that they are naturally also within the technical scope of the present disclosure.

The example in which the rotational power generated by the turbocharger 11 is used as energy for driving the generator 12 in the gas turbine system 1 has been described above. However, in the gas turbine system 1, the rotational power generated by the turbocharger 11 may be used for other purposes. Examples of other applications include an application for driving a traveling body such as a ship.

The examples in which the combustion device 10, the combustion device 10A, the combustion device 10B, the combustion device 10C, and the combustion device 10D are used in the gas turbine system 1 have been described above. However, the combustion device 10, the combustion device 10A, the combustion device 10B, the combustion device 10C, and the combustion device 10D may be used in a device other than the gas turbine system 1. Examples of the device other than the gas turbine system 1 include an industrial furnace for changing the shape or the property of a material by combustion in a combustor.

In the example of Fig. 1 described above, the air sent from the compressor 11a to the combustor 13 passes between the outer peripheral surface of the liner 13b and the inner peripheral surface of the casing 13a and then is sent to the combustion chamber 13c. However, the path of the air sent from the compressor 11a to the combustor 13 is not limited to this example which is a reverse-flow type.

### Reference Signs List

1:GAS TURBINE SYSTEM, 10:COMBUSTION DEVICE, 10A:COMBUSTION DEVICE, 10B:COMBUSTION DEVICE, 10C:COMBUSTION DEVICE, 10D:COMBUSTION DEVICE, 13b:LINER, 13f:OPENING, 14a:FIRST PIPE (PIPE), 14c:INJECTION VALVE, 14d:SWIRLING MEMBER, 23:AIR FLOW PASSAGE, 24:FIRST AMMONIA FLOW PASSAGE, 25:SECOND AMMONIA FLOW PASSAGE, 26:THROUGH-HOLE, 27:THROUGH-HOLE GROUP, 27a:THROUGH-HOLE GROUP, 27b:THROUGH-HOLE GROUP

## Claims

1. A combustion device comprising:
a liner having an opening at an end and a combustion chamber formed inside the liner;
a first ammonia flow passage inserted through the opening of the liner, the first ammonia flow passage communicating with the combustion chamber via an injection valve and supplied with liquid ammonia;
a second ammonia flow passage covering an outer periphery of the first ammonia flow passage; and
an air flow passage covering an outer periphery of the second ammonia flow passage.

2. The combustion device according to claim 1, further comprising:
a pipe that partitions the first ammonia flow passage and the second ammonia flow passage; and
at least one through-hole formed on a side surface of the pipe and communicating the first ammonia flow passage and the second ammonia flow passage.

3. The combustion device according to claim 2,
wherein the through-hole is formed within a region where the air flow passage is present in an axial direction of the pipe.

4. The combustion device according to claim 2, further comprising:
at least one through-hole group including a plurality of the through-holes formed at intervals in a circumferential direction of the pipe.

5. The combustion device according to claim 4,
wherein a plurality of the through-hole groups are formed at intervals in an axial direction of the pipe.

6. The combustion device according to claim 5,
wherein positions of the through-holes in the circumferential direction are different between the through-hole groups adjacent to each other.

7. The combustion device according to claim 2,
wherein the through-hole extends in a direction intersecting with a radial direction of the pipe when viewed in an axial direction of the pipe.

8. The combustion device according to claim 1,
wherein the second ammonia flow passage is provided with a swirling member that swirls a fluid.

9. The combustion device according to claim 1,
wherein liquid ammonia is supplied to the second ammonia flow passage.

10. A gas turbine system comprising:
the combustion device according to any one of claims 1 to 9.
